# EUROPÄISCHE PATENTSCHRIFT

(11) **EP 0 733 186 B1**
(45) Veröffentlichungstag und Bekanntmachung des Hinweises auf die Patenterteilung: **28.11.2001**
(21) Anmeldenummer: 95934083.7
(22) Anmeldetag: 21.09.1995
(51) Int. Cl.: F21V 7/00

(54) **ANORDNUNG EINER LAMPE IN EINER ÖFFNUNG EINES REFLEKTORS EINES FAHRZEUG-SCHEINWERFERS**
ARRANGEMENT OF A LAMP IN AN APERTURE IN A MOTOR VEHICLE HEADLIGHT REFLECTOR
AMENAGEMENT D'UNE LAMPE DANS UNE OUVERTURE D'UN REFLECTEUR DE PROJECTEUR DE VEHICULE

(30) Priorität: 12.10.1994 DE 4436409
(43) Veröffentlichungstag der Anmeldung: 25.09.1996
(73) Patentinhaber: Hella KG Hueck & Co., 59552 Lippstadt (DE)
(72) Erfinder: SEIGER, Ralf, D-59557 Lippstadt (DE)
(86) Internationale Anmeldenummer: EP9503713
(87) Internationale Veröffentlichungsnummer: WO9612138

(56) Entgegenhaltungen:
- DE-A- 2 122 103
- DE-A- 2 312 633

## Beschreibung

Die Erfindung betrifft eine Anordnung einer Lampe in einer Öffnung eines Reflektors eines Fahrzeug-Scheinwerfers, bei welchem die Lampe von der Reflektorrückseite in die öffnung des Reflektors einsetzbar ist und mit ihrem Sockel an einer Anlagefläche des Reflektors anlegbar ist, mit einem Abdeckteil, welches die Öffnung auf der Reflektorrückseite verschließt und Lösbar mit dem Reflektor verbunden ist und mit mindestens einem federnden Halteelement, welches bei eingesetzter Lampe unter Vorspannung an dem Abdeckteil und dem Sockel der Lampe anliegt und den Sockel gegen die Anlagefläche des Reflektors drückt.

Eine solche Anordnung einer Lampe in einer Öffnung eines Reflektors eines Fahrzeug-Scheinwerfers ist aus der DE 28 52 833 bekannt. Die zur Aufnahme der Lampe dienende Öffnung des Reflektors ist auf der Rückseite des Reflektors von einem an den Reflektor angeformten Kragen umgeben. An die Innenseite des Kragens ist umlaufend eine Schulter angeformt, deren entgegen der Einsetzrichtung der Lampe gerichtete Fläche als Anlagefläche für einen Sockelteller der Lampe dient. Das Abdeckteil ist ein ringförmiger Deckel, welcher drehverschlußartig auf den Kragen des Reflektors aufgesetzt ist. Ein federndes Halteelement, welches eine Schraubenfeder ist, umgibt zwischen dem Sockelteller der Lampe und dem Deckel einen zylindrischen Sockelteil der Lampe. Die Schraubenfeder stützt sich an der Innenseite des Deckels ab und drückt den Sockelteller der Lampe gegen die Anlagefläche des Reflektors. Somit muß bei einem Wechsel der Lampe lediglich der Deckel und nicht zusätzlich das federnde Halteelement aus seiner Arretierung mit dem Reflektor gelöst werden. Die Montage des Deckels ist sehr umständlich und zeitaufwendig, wenn die Schraubenfeder nicht an dem Deckel befestigt ist. Die Schraubenfeder kann verbogen oder sogar verloren gehen, wenn der Deckel und die Schraubenfeder unachtsam beim Wechsel der Lampe beiseite gelegt werden und/oder die Montage des Deckels und der Schraubenfeder unsachgemäß durchgeführt wird. Beim Aufsetzen des Deckels auf den Kragen des Reflektors schräg zur Lampenachse kann die Lampe aus ihrer Sollage herausgedrückt werden und eine defokussierte Lage zum Reflektor einnehmen. Letzteres wird oftmals durch an den Deckel und/oder Reflektor angeformte Ansätze zu vermeiden gesucht, jedoch kann oftmals eine Defokussierung der Lampe nicht sicher ausgeschlossen werden. Eine Schraubenfeder als federndes Halteelement kann nur verwendet werden, wenn die Lampe hierfür einen ausreichend großen Sockelteller aufweist.

Das aus der DE 23 12 633 bekannte federnde Halteelement weist einen in den Kragen eingesetzten ringförmigen Abschnitt und zwei federnde Zungen auf, welche mit ihrem freien Ende entgegen der Einsetzrichtung der Lampe gerichtet sind und auf sich gegenüberliegenden Seiten des ringförmigen Abschnitts angeordnet sind. An den ringförmigen Abschnitt sind Halteansätze angeformt, welche mit Krallen in die Innenseite des Kragens eingedrückt sind. Der ringförmige Abschnitt des federnden Halteelements weist eine entgegen der Einsetzrichtung der Lampe gerichtete Anlagefläche für die Lampe auf. Die federnden Zungen hintergreifen den Sockel mit einem radialen nach innen gebogenen Abschnitt selbstrastend. Hierbei ist eine Montage und Demontage der Lampe einfach und schnell durchführbar, jedoch ist die Lage der Lampe zum Reflektor von der Lage des federnden Halteelements abhängig. Weiterhin ist die Lampe nicht sicher in dem Reflektor gehaltert, da sich die Verbindung zwischen dem federnden Halteelement und dem Reflektor wegen den im Fahrbetrieb auftretenden Vibrationen lösen kann.

Bei der DE 28 53 227 dient als federndes Halteelement eine Zunge, welche aus einem Blechstreifen hergestellt ist und mit einem Abschnitt an einem eine Öffnung eines Reflektors umgebenden Kragens befestigt ist und mit einem anderen Abschnitt einen Sockel einer in die Öffnung des Reflektors eingesetzten Lampe selbstrastend hintergreift und den Sockel sowohl gegen eine entgegen der Einsetzrichtung der Lampe gerichtete Anlagefläche des Reflektors als auch gegen eine radial zur Lampenachse hin gerichtete Anlagefläche drückt. Hierbei ist der Festsitz der Lampe durch den Festsitz der federnden Zunge an dem Kragen des Reflektors abhängig. Außerdem kann die Lampe bei ihrem Einsetzen in die Öffnung des Reflektors durch die Federkraft der federnden Zunge soweit seitlich abgelenkt werden, daß sie mit ihrem Glaskolben im Inneren des Reflektors bei der Verwendung einer Strahlenblende an diese anstoßen und beschädigt werden kann.

Aus der DE 40 12 282 A1 ist eine Anordnung einer Lampe in einer Öffnung eines Reflektors eines Fahrzeug-Scheinwerfers bekannt geworden, bei welcher in einer von einem Kragen umgebenden Öffnung des Reflektors eine Gasentladungslampe dicht eingesetzt ist. Das die Öffnung und die Lampe abdeckende Abdeckteil trägt ein der Gasentladungslampe vorgeschaltetes elektrisches Gerät, welches ein Zündgerät zum Starten der Gasentladungslampe und ein elektrisches Vorschaltgerät zum Betreiben der Gasentladungslampe beinhaltet. Das Zündgerät und das elektrische Vorschaltgerät können auch in separaten Gehäusen untergebracht sein, von denen nur eins von dem Abdeckteil getragen sein muß. Zwischen dem Abdeckteil bzw. dem elektrischen Gerät und der Gasentladungslampe besteht eine elektrische Steckverbindung. Aus der DE 40 12 282 sind keine Halteelemente entnehmbar, welche die Lampe im Fahrbetrieb vibrationsfrei und in ihrer Sollage halten.

Aufgabe der Erfindung ist es, die im Oberbegriff des Anspruchs 1 beschriebene Anordnung einer Lampe in einer Öffnung eines Reflektors eines Fahrzeug-Scheinwerfers derart zu gestalten, daß das federnde Halteelement weder bei unsachgemäßer Montage und Demontage des Abdeckteils noch bei einem unbeaufsichtigt weggelegten Abdeckteil, verbogen oder sogar verloren gehen kann, um zu erreichen, daß die Lampe bei montiertem Abdeckteil immer ihre Sollage sicher einnimmt und am Reflektor fest und vibrationsfrei gehalten ist. Diese Aufgabe wird nach der Erfindung dadurch gelöst, daß das federnde Halteelement mit einem seitlich der Öffnung des Reflektors angeordneten ersten Abschnitt an dem Reflektor arretiert ist, mit einem freistehenden zweiten Abschnitt sich am Abdeckteil abstützt und mit einem den Sockel der Lampe hintergreifenden dritten Abschnitt den Sockel der Lampe gegen die Anlagefläche des Reflektors drückt. Nach dem Einsetzen der Lampe in die Öffnung des Reflektors ist diese nicht nur zum Reflektor sondern auch zu dem an dem Reflektor arretierten federnden Halteelement ausgerichtet. Somit kann beim Montieren des Abdeckteils die Lampe nicht aus ihrer Sollage herausbewegt werden und ist nach dem Aufsetzen des Abdeckteils, das heißt, nachdem das federnde Halteelement sich an dem Abdeckteil abstützt, sicher an dem Reflektor gehalten. Da die zum Festsetzen der Lampe notwendige Federkraft des Halteelementes erst nach dem Aufsetzen des Abedeckteils besteht, kann nach demontiertem Deckel die Lampe Leichtgängig aus der Reflektoröffnung heraus und in diese hinein geführt werden. Letzteres ist besonders zweckmäßig, wenn der Glaskolben der Lampe sehr empfindlich gegen Stoß ist und im Inneren des Reflektors der Glaskolben von einer Strahlenblende eng umgeben ist.

Ein leichtgängiges Montieren und Demontieren der Lampe ist möglich, wenn von den aneinanderliegenden Flächen des Abdeckteils und des federnden Halteelementes mindestens eine Fläche eine schräg zur Einsetzrichtung der Lampe verlaufende Auflauffläche ist, durch welche das federnde Halteelement nach dem Aufsetzen des Abdeckteils sowohl radial zur Lampenachse hin als auch zum Reflektor hin gedrückt ist. Bei demontiertem Abdeckteil kann das federnde Halteelement soweit radial zur Lampenachse nach außen federn, daß die Lampe bei ihrem Einführen in die Öffnung des Reflektors mit dem federnden Halteelement nicht in Berührung kommt.

Die Verbindung zwischen dem Abdeckteil und dem Reflektor ist sehr vielseitig ausführbar, wenn das federnde Halteelement sich an einer Auflagefläche des Abdeckteils abstützt, welche kreisringförmig gestaltet ist und mit ihrer Mittelachse mit der Lampenachse zusammenfällt. Die Verbindung kann ein Drehverschluß zwischen dem Abdeckteil und dem Reflektor sein, da dann das federnde Halteelement an der kreisringförmig gestalteten Auflauffläche entlanggleitet. Wegen der kreisringförmigen Auflauffläche kann das Abdeckteil auch in mehreren Gradstellungen mit dem Reflektor verbunden werden. Dies ist zweckmäßig, wenn das Abdeckteil unsymmetrisch ausgeführt ist, wie zum Beispiel bei einem Abdeckteil, welches ein einer Gasentladungslampe vorgeschaltetes elektrisches Gerät trägt. In dem elektrischen Gerät kann entweder nur das zum Starten der Lampe dienende Zündgerät oder das Zündgerät und ein zum Betreiben der Lampe dienendes Vorschaltgerät integriert sein.

Bei einer besonders einfachen und kostengünstig hergestellten Ausführungsform des federnden Halteelementes ist sein zweiter und dritter Abschnitt von einer zum Abdeckteil und zum Sockel der Lampe hin gebogenen federnden Zunge gebildet. Die Funktion der federnden Zunge ist sicher, wenn sie V-förmig gestaltet ist, wobei der zweite Abschnitt von dem Scheitelbereicht der V-Form und der dritte Abschnitt von dem zum Sockel hin weisenden Endabschnitt des freien Schenkels der V-Form gebildet ist.

Zudem ist es weiterhin vorteilhaft, wenn der freie Endabschnitt der federnden Zunge radial zur Lampenachse nach außen hin gebogen ist, unter Vorspannung an einem äußeren Rand des Sockels der Lampe anliegt, den Sockel der Lampe axial gegen eine erste Anlagefläche des Reflektors drückt und radial zur Lampenachse gegen eine zweite Anlagefläche des Reflektors drückt. Bei einer solchen Ausgestaltung muß der Sockel für die Haltefeder keine große radiale Ausdehnung zur Lampenachse aufweisen.

Eine besonders einfach zu montierende Form des federnden Halteelementes besteht, wenn sein erster Abschnitt ringförmig gestaltet ist, die Öffnung des Reflektors umgibt und zusammen mit der federnden Zunge einstückig aus Federblech hergestellt ist. Die Verbindung zwischen dem ringförmigen ersten Abschnitt des federnden Halteelements und dem Reflektor kann selbstrastend oder klemmend ausgeführt sein. Hierbei sollte der ringförmige erste Abschnitt einen so großen Innendurchmesser aufweisen, daß die entgegen der Einsetzrichtung gerichtete Anlagefläche des Reflektors im Inneren des ringförmigen ersten Abschnitts liegt.

Die Lampe ist besonders sicher gegen eine entgegen der Einsetzrichtung der Lampe gerichtete Anlagefläche und eine radial zur Lampenachse hin gerichtete Anlagefläche des Reflektors gedrückt, wenn an dem Sockel der Lampe auf sich gegenüberliegenden Seiten der Öffnung des Reflektors jeweils eine federnde Zunge mit einer Federkraft anliegt, wobei in Einsetzrichtung der Lampe gesehen, die beiden Federkräfte in einem stumpfen Winkel zueinander verlaufen, welcher von der radial zur Lampenachse hin gerichteten Anlagefläche weg geöffnet ist.

Der radiale Festsitz der Lampe am Reflektor ist besonders sicher, wenn zwischen den beiden federnden Zungen eine Haltefeder angeordnet ist, welche den Sockel der Lampe gegen die radial zur Lampenachse hin gerichtete Anlagefläche drückt und einstückig mit dem ringförmigen ersten Abschnitt ausgeführt ist. Da die Haltefeder ausschließlich nur eine radiale Kraft auf den Sockelteller ausübt, kann sie den Sockelteller auf der der Haltefeder gegenüberliegenden Seite nicht von der entgegen der Einsetzrichtung der Lampe gerichteten Anlagefläche des Reflektors abheben. Letzteres ist möglich, wenn der Sockel an drei Stellen an der Anlagefläche anliegt und die Stellen von der Haltefeder beabstandet sind.

Bei einer besonders vorteilhaften Weiterbildung der Erfindung besteht zwischen der Lampe und dem Abdeckteil eine elektrische Steckverbindung und das federnde Halteelement hintergreift mit seinem dritten Abschnitt den Sockel der Lampe selbstrastend. Dadurch ist die Lampe vor dem Aufsetzen des Abdeckteils auf den Reflektor verliersicher an dem Reflektor gehalten. Dies ist zweckmäßig, wenn die Lampe eine Gasentladungslampe ist und das Abdeckteil ein der Gasentladungslampe vorgeschaltetes elektrisches Gerät trägt. Dadurch kann die Lampe bei einem Abnehmen des Abdeckteils und des elektrischen Gerätes von dem Reflektor nicht mit aus der Öffnung des Reflektors herausgezogen werden und somit ist bei einer Demontage des Abdeckteils die Unterbrechung des elektrischen Kontaktes zwischen dem elektrischen Gerät und der Gasentladungslampe sicher. Außerdem kann beim Abnehmen des Abdeckteils und des elektrischen Gerätes der Glaskolben der Gasentladungslampe nicht abbrechen und in das Innere des Scheinwerfers fallen. Zudem kann die Gasentladungslampe leicht und einfach in die Öffnung des Reflektors eingeführt und ihre Sollage vor dem Aufsetzen des Abdeckteils überprüft werden.

Zwei Ausführungsbeispiele der Erfindung sind in der Zeichnung dargestellt, und zwar zeigt
- Figur 1: einen horizontalen Längsschnitt nach der Linie A-A in Figur 2 durch eine Befestigungsvorrichtung für eine Anordnung einer Lampe in einer öffnung eines Reflektors eines Fahrzeug-Scheinwerfers;
- Figur 2: eine Ansicht aus Richtung X in Figur 1 auf die Öffnung des Reflektors und ein die Öffnung umgebendes federndes Halteelement ohne die Lampe und ein die Öffnung verschließendes Abdeckteil;
- Figur 3: einen Schnitt nach der Linie B-B in Figur 2 durch das federnde Halteelement;
- Figur 4: eine Teilainsicht Y in Figur 1 des federnden Halteelementes und
- Figur 5: einen horizontalen Längsschnitt durch eine andere Befestigungsvorrichtung für eine Anordnung einer Lampe in einer Öffnung eines Reflektors eines Fahrzeug-Scheinwerfers.

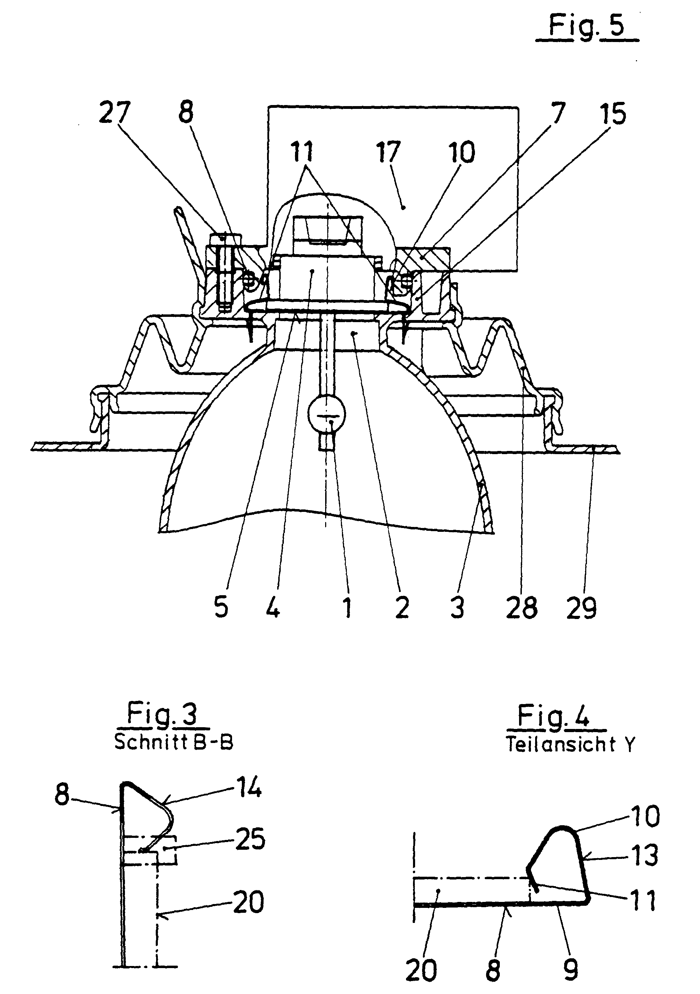

Ein schalenförmiger Reflektor (3) eines Fahrzeug-Scheinwerfers ist aus Kunststoff hergestellt und weist im Bereich seines Scheitels eine kreisrunde Öffnung (2) auf, welche zur Aufnahme einer Lampe (1) dient. Die Lampe (1) ist eine Gasentladungslampe und weist einen fingerartigen Glaskolben (19) und einen aus Kunststoff bestehenden zylinderförmigen Sockel (4) auf. Die Lampe (1) ist von der Rückseite des Reflektor (3) mit ihrem Glaskolben (19) voraus in Öffnung (2) eingeführt bis ihr Sockel (4) mit einem umlaufenden äußeren Flansch (20) an der die Öffnung (2) umgebenden Anlagefläche (5) des Reflektors (3) anliegt. Die Anlagefläche (5) ist entgegen der Einsetzrichtung der Lampe (1) gerichtet. An der Anlagefläche (5) des Reflektors (3) liegt der Sockel (4) mit drei Warzen (21) an, die die Spitzen eines gleichschenkligen Dreiecks (22) sind. (In Figur 2 ist ausschließlich das Dreieck (22) dargestellt). Der fingerartige Glaskolben (19) der Lampe (1) ist von einem in der Zeichnung nicht dargestellten Abschatter eng umgeben. Der Flansch (20) der Lampe (1) liegt mit seiner Stirnfläche an einer radial zur Lampenachse hin gerichteten Anlagefläche (6) an, die von zwei an den Reflektor (3) angeformten Ansätzen (23) gebildet ist. Zwischen den beiden Ansätzen (23) ist mittig eine Warze (21) angeordnet und verläuft eine die Lampenachse schneidende Symmetrielinie (22).

Ein federndes Halteelement (8) drückt den Sockel sowohl gegen die entgegen der Einsetzrichtung der Lampe (1) gerichtete Anlagefläche (5) als auch gegen die radial zur Lampenachse gerichtete Anlagefläche (6). Das federnde Halteelement ist aus Federblech hergestellt und weist zwei federnde Zungen mit einem zweiten Abschnitt (10 und 11) und einer Haltefeder (14) auf. Der ringförmige erste Abschnitt (9) des Halteelementes (8) umgibt die Öffnung (2) des Reflektors (3) in einem Abstand und weist an seiner äußeren Seite Haken (24) auf, welche mit ihren Spitzen in die Innenseite eines die Öffnung umgebenden Kragens (15) des Reflektors (3) eingedrückt sind. Auf der den Ansätzen (23) gegenüberliegenden Seite der Öffnung (2) ist an den äußeren Rand des ringförmigen ersten Abschnitts (9) die Haltefeder (14) angeformt, welche fahnenartig ausgeführt ist und um eine quer zu ihrer Längsausdehnung verlaufende Biegelinie V-förmig gebogen ist. Die Mittellinie der V-förmigen Haltefeder (14) verläuft annähernd parallel zur Einsetzrichtung der Lampe (1). Die Haltefeder (14) liegt mit dem Ende ihres freien Schenkels unter Vorspannung an der Stirnfläche des Flansches (20) des Sockels (4) der Lampe (1) an und drückt den Flansch (20) gegen die Anlagefläche (6) der beiden Ansätze (23). Die fahnenartige Haltefeder (14) weist einen mittleren Schlitz auf, mit welchem die Haltefeder (14) einen an den Reflektor (3) angeformten Positionierungsnocken (25) umfaßt. Der Positionierungsnocken (25) greift in einer Aussparung des Flansches (20) des Sockels (4) der Lampe (1) ein. Die den zweiten und dritten Abschnitt (10 und 11) aufweisenden federnden Zungen des Halteelementes (8) liegen ebenfalls zu der zwischen den beiden Anlageflächen (6) und durch den Positionierungsnocken (25) hindurchgehenden Symmetrielinie des Dreiecks (22) symmetrisch. Die beiden federnden Zungen sind somit auf sich gegenüberliegenden Seiten der Öffnung (2) des Reflektors (3) angeordnet. Dort sind sie jeweils an den äußeren Rand des ringförmigen Abschnitts (9) angeformt. Die beiden federnden Zungen sind um eine quer zu ihrer Längsausdehnung verlaufenden Biegelinie V-förmig gebogen, wobei die Mittellinie der V-Form annähernd in Einsetzrichtung der Lampe (1) verläuft und der eine Schenkel an den äußeren Rand des ersten Abschnitts (9) angeformt ist, während der freie Schenkel mit einem radial nach außen gebogenen freien Endabschnitt, welcher der dritte Abschnitt (11) ist, unter Vorspannung an dem äußeren Rand des Flansches (20) des Sockels (4) anliegt. Die beiden federnden Zungen drücken den Flansch (20) des Sockels (4) gegen die beiden Anlageflächen (5 und 6). Dieses Andrücken des Sockels (4) gegen zwei Anlageflächen (5 und 6) liegt darin begründet, weil die auf den Sockel wirkenden beiden Federkräfte der federnden Zungen in Einsetzrichtung der Lampe gesehen in einem stumpfen Winkel (α) zueinander verlaufen, dessen Scheitelpunkt auf der Lampenachse liegt. Die Winkelhalbierende des stumpfen Winkels fällt mit der Symmetrielinie des Dreiecks (22) zusammen, welche durch den Positionierungsnocken (25) verläuft. Nach einem Einsetzen der Lampe (1) in die Öffnung (2) des Reflektors (3) hintergreifen die federnden Zungen mit ihrem dritten Abschnitt (11) selbstrastend den Flansch (20) des Sockels (4) und drücken ihn sowohl gegen die Anlagefläche (5) als auch die Anlagefläche (6). Die Haltefeder (14) drückt den Sockel (4) ausschließlich gegen die beiden radial zur Lampenachse gerichteten Flächen (6). Somit kann nach dem Einsetzen der Lampe (1) in die Öffnung (2) des Reflektors (3) überprüft werden, ob die Lampe ihre Sollage in dem Reflektor (3) einnimmt.

Auf den Kragen (15) des Reflektors (3) ist ein aus Kunststoff bestehendes Abdeckteil (7) aufgesetzt, welches mit einem umlaufenden Kragen (16) in den Kragen (15) des Reflektors (3) eingeführt ist. Der Kragen (16) des Abdeckteils (7) weist außen eine umlaufende Ringnut auf, in welche eine Ringdichtung (26) eingesetzt ist, die unter Vorspannung an der Innenseite des Kragens (15) des Reflektors (3) anliegt. Das Abdeckteil (7) ist mittels drei Schrauben (27), welche in eine Gewindebohrung des Kragens (15) des Reflektors (3) eingreifen, an dem Reflektor (3) befestigt. Die Innenseite des Kragens (16) des Abdeckteils (7) verjüngt sich entgegen der Einsetzrichtung der Lampe (1) konisch und dient für die beiden federnden Zungen des Halteelementes (8) als Auflauffläche (12), an welcher sich die federnden Zungen mit ihrem zweiten Abschnitt (10) abstützen. Der Abschnitt (10) liegt im Bereich des Scheitels der V-förmigen federnden Zungen. Der Bereich des Scheitels der V-Form verläuft in einem Bogen und dient zusammen mit den an den ringförmigen Abschnitt angeformten Schenkel der V-Form als Auflauffläche (13), welche an der Auflauffläche (12) des Abdeckteils (7) anliegt.

Beim Aufsetzen des Abdeckteils (7) auf den Kragen (15) des Reflektors (3) gleitet die Auflauffläche (13) des federnden Halteelements (8) an der Auflauffläche (12) des Abdeckteils entlang und die radial nach außen aufgefederten Zungen werden radial nach innen gedrückt bis sie mit einer ausreichend großen Federkraft an dem Flansch (20) des Sockels (4) der Lampe (1) anliegen. Das Abdeckteil (7) trägt an seiner Außenseite ein elektrisches Gerät (17), dessen Gehäuse einstückig mit dem Abdeckteil (7) aus Kunststoff hergestellt ist. Das elektrische Gerät (17) beinhaltet ein zum Starten der Lampe (1), welche eine Gasentladungslampe ist, dienendes Zündgerät und ein zum Betrieb der Gasentladungslampe dienendes elektrisches Vorschaltgerät. Der Sockel (4) der Lampe (1) ragt durch eine Öffnung (7) des Abdeckteils (7) in das elektrische Gerät (17) hinein und ist mit diesem durch eine elektrische Steckverbindung (18) elektrisch verbunden. Nach einem Abnehmen des Abdeckteils (7) und des Gerätes (17) von dem Reflektor (3) verbleibt die Lampe (1) in der Öffnung (2) des Reflektors (3), da die Lampe (1) durch das federnde Halteelement (8) gehalten ist. Die Federkraft, mit welcher das federnde Halteelement (8) an dem Flansch (20) des Sockels (4) anliegt, ist jedoch nicht mehr so groß und somit kann die Lampe (1) leichtgängig aus der Öffnung (2) des Reflektors (3) herausgenommen werden. Außerdem ist wegen dem Verbleiben der Lampe (1) in der Öffnung (2) des Reflektors (3) die Stromzufuhr zwischen dem elektrischen Gerät (17) und der Lampe (1) unterbrochen und somit ist die die Lampe (1) wechselnde Person vor der Gefahr eines Stromschlages sicher.

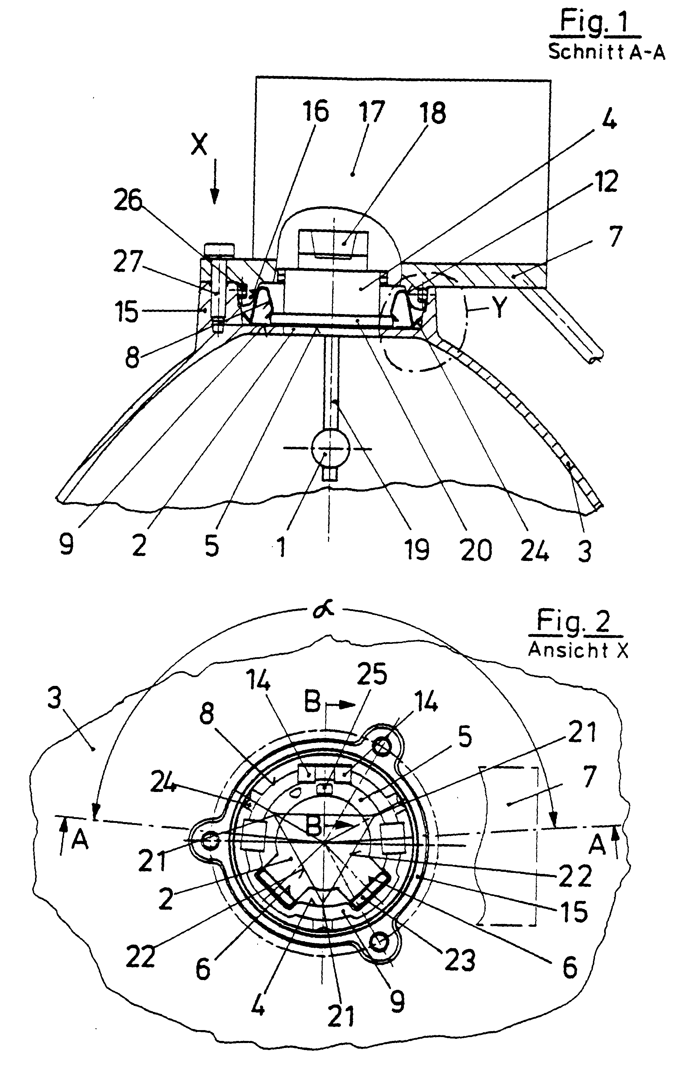

Bei dem in Figur 5 dargestellten Ausführungsbeispiel sind im wesentlichen die den zweiten und dritten Abschnitt (10 und 11) aufweisenden federnden Zungen des Halteelementes (8) anders ausgeführt. Der an dem Abdeckteil anliegende dritte Abschnitt (110) ist von dem freien Endabschnitt der federnden Zunge gebildet und der dritte Abschnitt (11) von einem zum Flansch (20) des Sockels (4) hin ausgebogenen mittleren Abschnitt der Zungen gebildet. Der Kragen (15) ist doppelwandig ausgeführt und weist zwischen den beiden Wänden gleichmäßig über den Umfang des Kragens (15) verteilt sechs Gewindebohrungen für die Schrauben (27) auf. Da wie in dem in Figur 1 und Figur 2 dargestellten Ausführungsbeispiel das Abdeckteil (7) an drei Stellen mit dem Kragen (15) verbunden ist, kann das Abdeckteil (7) in vielen Winkelstellungen an dem Reflektor (3) befestigt werden. An der äußeren Wand des Kragens (15) liegt eine ringförmige Dichtungsmanschette (28) an, welche dicht auf den Öffnungsrand eines den Reflektor (3) aufnehmenden Gehäuses (29) des Scheinwerfers aufgesetzt ist.

## Patentansprüche

1. Anordnung einer Lampe (1) in einer Öffnung (2) eines Reflektors (3) eines Fahrzeug-Scheinwerfers, bei welchem die Lampe (1) von der Reflektorrückseite in die Öffnung des Reflektors (3) einsetzbar ist und mit ihrem Sockel (4) an einer Anlagefläche (5) des Reflektors (3) anlegbar ist, mit einem Abdeckteil (7), welches die Öffnung (2) auf der Reflektorrückseite verschließt und lösbar mit dem Reflektor (3) verbunden ist, und mit mindestens einem federnden Halteelement (8), welches bei eingesetzter Lampe (1) unter Vorspannung an dem Abdeckteil (7) und dem Sockel (4) der Lampe (1) anliegt und den Sockel (4) gegen die Anlagefläche (5 und 6) des Reflektors (3) drückt, **dadurch gekennzeichnet, daß** das federnde Halteelement (8) mit einem seitlich der Öffnung (2) des Reflektors (3) angeordneten ersten Abschnitt (9) an dem Reflektor (3) arretiert ist, mit einem freistehenden zweiten Abschnitt (10) sich am Abdeckteil (7) abstützt und mit einem den Sockel (4) der Lampe (1) hintergreifenden dritten Abschnitt (11) den Sockel (4) der Lampe (1) gegen die Anlagefläche (5) des Reflektors (3) drückt.

2. Anordnung nach Anspruch 1, **dadurch gekennzeichnet, daß** von den aneinanderliegenden Flächen des Abdeckteils (7) und des federnden Halteelementes (8) mindestens eine Fläche eine schräg zur Einsetzrichtung der Lampe (1) verlaufende Auflauffläche (12 bzw. 13) ist, durch welche das federnde Halteelement (8) nach dem Aufsetzen des Abdeckteils (7) sowohl radial zur Lampenachse hin als auch zum Reflektor (3) hin gedrückt ist.

3. Anordnung nach Anspruch 2, **dadurch gekennzeichnet, daß** das federnde Halteelement (8) sich an einer Auflauffläche (12) des Abdeckteils (7) abstützt, welche kreisringförmig gestaltet ist und mit ihrer Mittelachse mit der Lampenachse zusammenfällt.

4. Anordnung nach einem der Ansprüche 1 bis 3, **dadurch gekennzeichnet, daß** der zweite und dritte Abschnitt (10 und 11) des federnden Halteelementes (8) von einer zum Abdeckteil (7) und zum Sockel (4) der Lampe (1) hin gebogenen federnden Zunge gebildet ist.

5. Anordnung nach Anspruch 4, **dadurch gekennzeichnet, daß** die federnde Zunge V-förmig gestaltet ist, wobei der federnde Abschnitt (10) von dem Scheitelbereich der V-Form und der dritte Abschnitt von dem zum Sockel (4) hinweisenden freien Endabschnitt des freien Schenkels der V-Form gebildet ist.

6. Anordnung nach Anspruch 5, **dadurch gekennzeichnet, daß** der freie Endabschnitt (11) der federnden Zunge radial zur Lampenachse nach außen hin gebogen ist und unter Vorspannung an einem äußeren Rand des Sockels (4) der Lampe (1) anliegt und den Sockel (4) der Lampe (1) axial gegen eine erste Anlagefläche (5) drückt und radial zur Lampenachse gegen eine zweite Anlagefläche (6) drückt.

7. Anordnung nach einem der Ansprüche 4 bis 6, **dadurch gekennzeichnet, daß** der erste Abschnitt (9) des federnden Halteelements (8) ringförmig gestaltet ist, die Öffnung (2) des Reflektors (3) umgibt und zusammen mit der federnden Zunge einstückig aus Federblech hergestellt ist.

8. Anordnung nach einem der Ansprüche 1 bis 7, **dadurch gekennzeichnet, daß** an dem Sockel (4) auf sich gegenüberliegenden Seiten der Öffnung (2) des Reflektors (3) jeweils eine federnde Zunge mit einer Federkraft anliegt, wobei in Einsetzrichtung der Lampe (1) gesehen die beiden Federkräfte in einem stumpfen Winkel (α) zueinander verlaufen, welcher von der radial zur Lampenachse hin gerichteten Anlagefläche (6) weg geöffnet ist.

9. Anordnung nach Anspruch 8, **dadurch gekennzeichnet, daß** zwischen den beiden federnden Zungen eine Haltefeder (14) angeordnet ist, welche den Sockel (4) der Lampe (1) gegen die radial zur Lampenachse hin gerichtete Anlagefläche (6) drückt und einstückig mit dem ringförmigen ersten Abschnitt (9) ausgeführt ist.

10. Anordnung nach einem der Ansprüche 1 bis 9, **dadurch gekennzeichnet, daß** zwischen der Lampe (1) und dem Abdeckteil (7) eine elektrische Steckverbindung (18) besteht.

11. Anordnung nach einem der Ansprüche 1 bis 10, **dadurch gekennzeichnet, daß** das federnde Halteelement (8) mit seinem dritten Abschnitt (11) den Sockel (4) der Lampe (1) selbstrastend hintergreift.

12. Anordnung nach einem der Ansprüche 1 bis 11, **dadurch gekennzeichnet, daß** die Lampe (1) eine Gasentladungslampe ist und das Abdeckteil (7) ein der Gasentladungslampe vorgeschaltetes elektrisches Gerät (17) trägt.

## Claims

1. Arrangement of a lamp (1) in an opening (2) of a reflector (3) of a vehicle headlamp, where the lamp (1) is insertible from the rear of the reflector into the opening of the reflector (3) and seated with its socket (4) against a seating surface (5) of the reflector (3), with a covering part (7) which seals the opening (2) at the rear of the reflector and which is detachably attached to the reflector (3), and with at least one resilient holding element (8) which, with the lamp (1) inserted, abuts in a pretensioned manner the covering part (7) and the socket (4) of the lamp (1) and pushes the socket (4) against the seating surface (5 and 6) of the reflector (3), **characterised in that** the resilient holding element (8) is secured against the reflector (3) by a first section (9) arranged laterally of the opening (2) of the reflector (3), supported against the covering part (7) by a free-standing second section (10), and pushes the socket (4) of the lamp (1) against the seating surface (5) of the reflector (3) with a third section (11) which reaches behind the socket (4) of the lamp (1).

2. Arrangement according to Claim 1, **characterised in that** of the abutting surfaces of the covering part (7) and of the resilient holding element (8) at least one surface is a run-up surface (12 or 13) which extends transversely to the direction of insertion of the lamp (1) through which, after positioning of the covering part (7), the resilient holding element (8) is pushed both radially to the lamp axis and to the reflector (3).

3. Arrangement according to Claim 2, **characterised in that** the resilient holding element (8) supports itself against the run-up surface (12) of the covering part (7) which is of circular design and the centre axis of which coincides with the lamp axis.

4. Arrangement according to one of Claims 1 to 3, **characterised in that** the second and third section (10 and 11) of the resilient holding element (8) is formed by a resilient tab which is bent towards the covering part (7) and towards the socket (4) of the lamp (1).

5. Arrangement according to Claim 4, **characterised in that** the resilient tab is V-shaped, and the resilient section (10) is formed by the culminating area of the V-shape, and the third section is formed by the free end section of the free shank of the V-shape which is oriented towards the socket (4).

6. Arrangement according to Claim 5, **characterised in that** the free end section (11) of the resilient tab is bent radially outwards relative to the lamp axis and abuts whilst pretensioned an outer edge of the socket (4) of the lamp (1) and pushes the socket (4) of the lamp (1) axially against a first seating surface (5) and radially to the lamp axis against a second seating surface (6).

7. Arrangement according to one of Claims 4 to 6, **characterised in that** the first section (9) of the resilient holding element (8) is of circular design, surrounding the opening (2) of the reflector (3) and manufactured of spring metal in one piece with the resilient tab.

8. Arrangement according to one of Claims 1 to 7, **characterised in that** on the socket (4) on opposite sides of the opening (2) of the reflector (3) abuts a respective resilient tab with a springload, and the two springloads extend at an obtuse angle (a) to each other, as seen in the direction of insertion of the lamp (1), which is opened away from the seating surface (6) which is oriented radially to the lamp axis.

9. Arrangement according to Claim 8, **characterised in that** between the two resilient tabs is arranged a holding spring (14) which pushes the socket (4) of the lamp (1) against the seating surface (6) which is oriented radially towards the lamp axis and designed in one piece with the circular first section (9).

10. Arrangement according to one of Claims 1 to 9, **characterised in that** an electric plug connection (18) exists between the lamp (1) and the covering part (7).

11. Arrangement according to one of Claims 1 to 10, **characterised in that** the resilient holding element (8) self-detentingly reaches with its third section (11) behind the socket (4) of the lamp (1).

12. Arrangement according to one of Claims 1 to 11, **characterised in that** the lamp (1) is a gas-discharge lamp and the covering part (7) supports an electric device (17) connected upstream of the gas-discharge lamp.

## Revendications

1. Agencement d'une lampe (1) dans une ouverture (2) d'un réflecteur (3) d'un phare de véhicule, dans lequel la lampe (1) peut être mise en place dans l'ouverture du réflecteur (3) depuis la face postérieure du réflecteur et peut être appliquée avec son socle (4) sur une surface d'appui (5) du réflecteur (3), comportant une pièce de recouvrement (7) qui ferme l'ouverture (2) sur la face postérieure du réflecteur et qui est reliée de manière amovible au réflecteur (3), et comportant au moins un élément de retenue (8) élastique qui repose sous précontrainte sur la pièce de recouvrement (7) et sur le socle (4) de la lampe (1) lorsque la lampe (1) est mise en place, et qui presse le socle (4) contre la surface d'appui (5 et 6) du réflecteur (3), **caractérisé en ce que** l'élément de retenue (8) élastique est arrêté sur le réflecteur (3) avec un premier tronçon (9) agencé latéralement à l'ouverture (2) du réflecteur (3), **en ce qu'**il prend appui avec un deuxième tronçon (10) libre sur la pièce de recouvrement (7) et **en ce qu'**avec un troisième tronçon (11) engageant par l'arrière le socle (4) de la lampe (1), il presse le socle (4) de la lampe (1) contre la surface d'appui (5) du réflecteur (3).

2. Agencement selon la revendication 1, **caractérisé en ce que** parmi les surfaces, appliquées les unes contre les autres de la pièce de recouvrement (7) et de l'élément de retenue (8) élastique, au moins une surface est une surface formant une rampe en pente (12 et 13, respectivement) par rapport à la direction de mise en place de la lampe (1), grâce à laquelle l'élément de retenue (8) élastique est pressé à la fois radialement vers l'axe de la lampe et vers le réflecteur (3) après avoir mis en place la pièce de recouvrement (7).

3. Agencement selon la revendication 2, **caractérisé en ce que** l'élément de retenue (8) élastique prend appui sur une surface formant une rampe (12) de la pièce de recouvrement (7), laquelle est réalisée circulaire et dont l'axe médian coïncide avec l'axe de la lampe.

4. Agencement selon l'une quelconque des revendications 1 à 3, **caractérisé en ce que** le deuxième tronçon et le troisième tronçon (10 et 11) de l'élément de retenue (8) élastique sont formés par une languette élastique recourbée vers la pièce de recouvrement (7) et vers le socle (4) de la lampe (1).

5. Agencement selon la revendication 4, **caractérisé en ce que** la languette élastique est réalisée en forme de V, le tronçon élastique (10) étant formé par la région de sommet du V et le troisième tronçon par le tronçon d'extrémité libre, orienté vers le socle (4), de la branche libre du V.

6. Agencement selon la revendication 5, **caractérisé en ce que** le tronçon d'extrémité libre de la languette élastique est replié vers l'extérieur radialement par rapport à l'axe de la lampe et repose sous précontrainte sur un bord extérieur du socle (4) de la lampe (1), et presse le socle (4) la lampe (1) axialement contre une première surface d'appui (5) et radialement, par rapport à l'axe de la lampe (1), contre une deuxième surface d'appui (6).

7. Agencement selon l'une quelconque des revendications 4 à 6, **caractérisé en ce que** le premier tronçon (9) de l'élément de retenue (8) élastique est réalisé de forme annulaire, **en ce qu'**il entoure l'ouverture (2) du réflecteur (3) et **en ce qu'**il est réalisé d'un seul tenant en tôle à ressort conjointement avec la languette élastique.

8. Agencement selon l'une quelconque des revendications 1 à 7, **caractérisé en ce que** sur le socle (4), sur des côtés opposés de l'ouverture (2) du réflecteur (3), une languette élastique respective repose avec une force élastique, les deux forces élastiques, vu en direction de mise en place de la lampe (1), s'étendant sous un angle obtus (α) l'une par rapport à l'autre, lequel est ouvert en éloignement de la surface d'appui (6) orientée radialement vers l'axe de la lampe.

9. Agencement selon la revendication 8, **caractérisé en ce qu'**entre les deux languettes élastiques est agencé un ressort de retenue (14) qui presse le socle (4) de la lampe (1) contre la surface d'appui (6) orientée radialement vers l'axe de la lampe et qui est réalisé d'un seul tenant avec le premier tronçon (9) de forme annulaire.

10. Agencement selon l'une quelconque des revendications 1 à 9, **caractérisé en ce qu'**il existe une connexion électrique (18) entre la lampe et la pièce de recouvrement (7).

11. Agencement selon l'une quelconque des revendications 1 à 10, caractérisé en ce l'élément de retenue (8) élastique engage avec son troisième tronçon (11) le socle (4) de la lampe (1) par l'arrière avec autoenclenchement.

12. Agencement selon l'une quelconque des revendications 1 à 11, **caractérisé en ce que** la lampe (1) est une lampe à décharge gazeuse et **en ce que** la pièce de recouvrement (7) porte un appareil électrique monté en amont de la lampe à décharge gazeuse.
